# EUROPEAN PATENT SPECIFICATION

(11) **EP 2 685 431 B1**
(45) Date of publication and mention of the grant of the patent: **21.08.2019**
(21) Application number: 12191419.6
(22) Date of filing: 06.11.2012
(51) Int. Cl.: G07C 5/08, H04L 29/08, G01M 17/007

(54) **Vehicle information management system**
Fahrzeuginformationsverwaltungssystem
Système de gestion d'informations de véhicules

(30) Priority: 12.07.2012 JP 2012156441
(43) Date of publication of application: 15.01.2014
(73) Proprietor: Yamaha Hatsudoki Kabushiki Kaisha, Iwata-shi, Shizuoka 438-8501 (JP)
(72) Inventor: Fujime, Yoko, Iwata-shi, Shizuoka 438-8501 (JP); Sekizuka, Shinnosuke, Iwata-shi, Shizuoka 438-8501 (JP)
(74) Representative: Grünecker Patent- und Rechtsanwälte PartG mbB

(56) References cited:
- US-A1- 2005 021 200
- US-A1- 2009 228 611

## Description

The present invention relates to a vehicle information management system according to the preamble of independent claim 1 and to a vehicle information management method according to the preamble of independent claim 9. Such a system and such a method can be taken from the prior art document US 2005/021200 A1.

Prior art document US 2009/228611 A1 discloses field devices on a communication network that can be configured using a configuration device that stores a configuration data for each of the field devices in a network configuration domain in nonvolatile memory. Each field device includes a configuration domain associated with configuration data stored in nonvolatile memory of the field device. In response to commands from the configuration device, the field devices upload configuration data to or download configuration data from the configuration device. Field devices receive configuration data from the configuration device and store the received configuration data in the nonvolatile memory to define the configuration of the field device. In particular, said prior art indicates some kind of terminate download command wherein an ACD sends a command to device to prepare for download and the device responds with a status message. ACD then sends an initiate download command followed by a series of download segment commands until all of the device configuration data stored in the network configuration domain of ADC for that particular device has been downloaded. Upon receiving a message from the device that the downloading of device configuration data is done, ACD then sends a terminate download command.

There is a known vehicle adapted to obtain freeze frame data for the vehicle and store the data in a storage in order to use it to diagnose and repair a malfunction for the occasion of an abnormality generated in the vehicle. Here, the freeze frame data refers to data that represents a vehicle state produced based on parameters related to the vehicle state obtained from a plurality of sensors provided at the vehicle. In such a vehicle, a repair worker uses an external device to read out the freeze frame data from the storage and specifies the type of a malfunction at the time of repairing the vehicle.

The freeze frame data includes a plurality of items used to diagnose a vehicle state. Different items are included in freeze frame data for different kinds of vehicles. Therefore, during maintenance or repair, a device that stores a control program according to the kind of the vehicle should be used to read the freeze frame data. Therefore, maintenance operation for different kinds of vehicles for example is cumbersome for a repair worker.

In order to solve the above-described problems, in a vehicle diagnostic device disclosed by JP-B 08-27221, a cartridge stored with a control program for each kind of vehicle is detachably provided.

In the vehicle diagnostic device disclosed by JP-B 08-27221, if freeze frame data cannot be read while a certain cartridge is mounted, the cartridge should be exchanged with another cartridge stored with a control program for the freeze frame data to read the freeze frame data. Therefore, the vehicle diagnostic device disclosed by JP-B 08-27221 can cope with various kinds of vehicles by exchanging cartridges.

In the vehicle diagnostic device disclosed by JP-B 08-27221, cartridges must be exchanged to mount a cartridge stored with a control program for each vehicle kind in order to read the freeze frame data. This makes repair operation cumbersome for a repair worker.

In the vehicle diagnostic device disclosed by JP-B 08-27221, every time cartridges are exchanged, the external device must read out a control program. Therefore, the vehicle diagnostic device disclosed by JP-B 08-27221 requires much time to read different diagnostic data for a plurality of different kinds of vehicles.

Using the vehicle diagnostic device disclosed by JP-B 08-27221, a repair worker cannot carry out repair operation when a cartridge stored with a control program for a vehicle that needs repairing is not available.

It is therefore an object of the present invention to provide a vehicle information management system and a vehicle information managing method that can cope with various kinds of vehicles, eliminates the necessity of cumbersome cartridge exchanging operation and allows diagnostic data to be accessed in a short time.

According to the present invention said object is solved by a vehicle information management system having the features of independent claim 1. Moreover, said object is also solved by a vehicle information managing method having the features of independent claim 9. Preferred embodiments are laid down in the dependent claims.

Accordingly, it is provided a vehicle information management system that manages diagnostic data indicating a vehicle state and includes a plurality of parameter detectors, a diagnostic data producing unit, a storage, and a transmitter. The parameter detectors each detect a parameter related to the vehicle state. The diagnostic data producing unit produces diagnostic data based on a parameter detected by each of the parameter detectors. The storage can store one or more diagnostic data pieces. The transmitter transmits one or more diagnostic data pieces stored in the storage to an external device connected to the vehicle. The transmitter transmits terminal data after all of one or more diagnostic data pieces are transmitted.

In the above-described vehicle information management system, terminal data is transmitted after one or more diagnostic data pieces are transmitted. The external device can determine the end of transmission of all the diagnostic data pieces by receiving the terminal data. Therefore, if the number of items in diagnostic data for each vehicle is unknown and the number of diagnostic data pieces to be transmitted from each vehicle is unknown, the end of reception of all the diagnostic data pieces for transmission can be determined. Therefore, regardless of the kind of a vehicle, all the diagnostic data pieces can be received. The vehicle information management system can cope with the case where the specification of data is changed by increasing the number of items included in freeze frame data.

If for example cartridge exchange is necessary in order to read diagnostic data with a different number of items or a different content, an external device must read out a control program every time cartridges are exchanged. Therefore, if cartridges must be exchanged, much time is required to read diagnostic data for a plurality of different kinds of vehicles. In the vehicle information management system, an external device does not have to read out a plurality of control programs when a plurality of diagnostic data pieces with different numbers of items and different item contents are received. Therefore, in the vehicle information management system, time required for accessing a plurality of diagnostic data pieces with different numbers of items or different item contents can be shorter than the arrangement that requires cartridges exchange.

In the vehicle information management system, cumbersome operation such as cartridge exchanging operation is not necessary. Therefore, in the above-described vehicle information management system, diagnostic data can be read out without carrying out operation such as cartridge exchange in repairing a plurality of different kinds of vehicles. This is highly convenient for a repair worker as compared to the arrangement that requires cartridge exchange.

### BRIEF DESCRIPTION OF THE DRAWINGS

Fig. 1 is a block diagram showing a structure of a motorcycle and an external device according to the present teaching.
Fig. 2 is a view showing a specific example of diagnostic data stored in a storage region.
Fig. 3 shows an overall structure of how the motorcycle is connected to the external device.
Fig. 4 is a flowchart for illustrating an operation of storing diagnostic data in a storage.
Fig. 5 is a flowchart for illustrating an operation of transmitting/receiving diagnostic data carried out by a vehicle information management system and a personal computer.
Fig. 6 is a view showing an operation of the vehicle information management system and the external device.
Fig. 7 is a partly enlarged front view showing a periphery of a meter in a motorcycle.

### DESCRIPTION OF THE EMBODIMENTS

There is a known vehicle that obtains freeze frame data for the vehicle and stores the data in the storage for the purpose of diagnosing and repairing a malfunction when there is an abnormality generated in the vehicle. In such a vehicle, a repair worker reads out freeze frame data from the storage using an external device and specifies the type of the malfunction and the like when the vehicle is to be repaired.

The freeze frame data includes a lot of items based on which a state of the vehicle is diagnosed. Different items are included in freeze frame data for different kinds of vehicles. Therefore, during maintenance and repair, the freeze frame data must be read using a device stored with a control program corresponding to the kind of the vehicle. Therefore, maintenance for different kinds of vehicles for example is cumbersome operation for a repair worker.

A vehicle diagnostic device that can cope with various kinds of vehicles by mounting a detachable cartridge stored with a control program according to the kind of a vehicle has already been suggested. In this device, if freeze frame data cannot be read from a certain mounted cartridge, the cartridge should be exchanged with a cartridge stored with a control program corresponding to the freeze frame data so that the freeze frame data can be read.

However, using the vehicle diagnostic device described above, a repair worker must exchange cartridges according to the kinds of vehicles. This makes repair cumbersome for the repair worker.

The inventors have come up with the idea of a diagnostic device that can cope with various kinds of vehicles without the cumbersome operation. In a structure according to the inventors' idea, one or more diagnostic data (freeze frame data) pieces are transmitted to an external device and terminal data is transmitted to the external device when all the diagnostic data pieces are transmitted. Upon receiving the terminal data, the external device determines that the transmission of all the diagnostic data has been finished. This structure can deal with various kinds of vehicles and cumbersome operation including cartridge exchange is not necessary. Therefore, the structure according to the inventors' idea is highly convenient for a repair worker. The structure works if the specification of diagnostic data is changed.

If cartridge exchange is necessary in order to read data with a different number of items or a different content, an external device must read out a control program every time cartridges are exchanged. Therefore, if cartridges must be exchanged, much time is required to read diagnostic data for a plurality of different kinds of vehicles. In the structure according to the inventors' idea, an external device does not have to read out a plurality of control programs when a plurality of diagnostic data pieces with different numbers of items and different item contents are received. Therefore, in the structure according to the inventors' idea, time required for accessing a plurality of diagnostic data pieces with different numbers of items or different item contents can be shorter than the arrangement that requires exchange cartridges.

The external device can determine the end of transmission of one or more frames of diagnostic data, and therefore diagnostic data can be displayed immediately after all the diagnostic data pieces are received. In this way, a repair worker can quickly start repair operation.

Now, referring to the drawings, a motorcycle 1 including a vehicle information management system according to one embodiment of the present teaching will be described. In the drawings, the same or corresponding portions are designated by the same reference characters and their description will not be repeated.

### Overall Structure

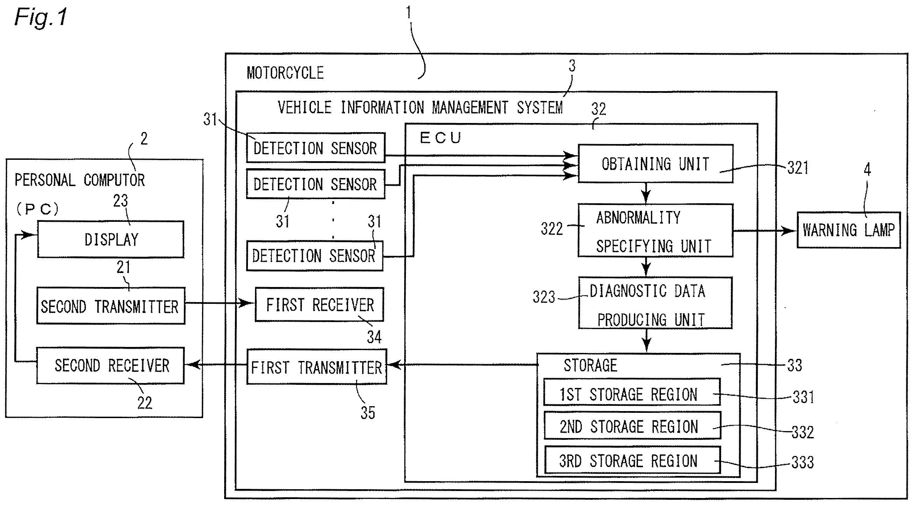

Fig. 1 is a block diagram of a vehicle information management system 3 for a motorcycle 1 and a personal computer (PC) 2. The motorcycle 1 includes the vehicle information management system 3 and a warning lamp 4.

The vehicle information management system 3 includes a plurality of detection sensors 31, an ECU (electronic control unit) 32, a first receiver 34, and a first transmitter 35. The plurality of detection sensors 31 are provided for example at an engine and a power supply in the motorcycle 1. The detection sensors 31 detect parameters related to a state of the vehicle. The plurality of detection sensors 31 for example include various sensors such as a vehicle speed sensor used to detect a vehicle speed and a throttle sensor. The plurality of detection sensors 31 are connected to the ECU 32.

The ECU 32 controls the engine or the like provided at the motorcycle 1. The ECU 32 includes an obtaining unit 321, an abnormality specifying unit 322, a diagnostic data producing unit 323, and a storage 33.

The obtaining unit 321 obtains parameters related to a state of the vehicle from the plurality of detection sensors 31. The abnormality specifying unit 322 specifies an abnormality about the vehicle based on the parameters obtained by the obtaining unit 321. The abnormality specifying unit 322 determines whether a parameter detected by each of the detection sensors 31 is within a predetermined normal range and specifies an abnormality based on a parameter outside the normal range. The abnormality specifying unit 322 specifies an abnormality based on abnormality specifying data stored in the storage 33. The abnormality specifying data represents a relation between the type of an abnormality and a parameter outside the normal range.

The diagnostic data producing unit 323 produces diagnostic data based on parameters detected by the plurality of detection sensors 31 when the abnormality specifying unit 322 specifies an abnormality. The diagnostic data producing unit 323 arranges the parameters in a predetermined order and produces diagnostic data.

The first transmitter 35 transmits one or more diagnostic data (freeze frame data) pieces stored in the storage 33 to the personal computer 2. The first transmitter 35 carries out packet communication with the personal computer 2. According to the embodiment, the first transmitter 35 can transmit one frame of diagnostic data included in a packet to the personal computer 2. Here, one unit of the diagnostic data is referred to as a "frame." The first transmitter 35 transmits terminal data to the personal computer 2 after finishing transmitting all the frames of diagnostic data to the personal computer 2 or if diagnostic data is not stored in a storage region. Here, the terminal data is data that notifies the personal computer 2 of the end of transmission of all the frames of diagnostic data or that diagnostic data is not stored in the storage region. When the first transmitter 35 transmits a plurality of frames of diagnostic data stored in the storage 33 to the personal computer 2, it transmits delimiter data to the personal computer 2 every time transmission of one frame of diagnostic data to the personal computer 2 ends. Here, the delimiter data is data used to notify the personal computer 2 of the end of transmission of one frame of diagnostic data when a plurality of diagnostic data pieces are transmitted to the personal computer 2. Here, the delimiter data is transmitted on a frame basis.

The storage 33 pre-stores various kinds of data such as abnormality specifying data used to specify abnormalities. The storage 33 includes a first storage region 331, a second storage region 332, and a third storage region 333. Each of the storage regions 331, 332, and 333 can store only one frame of diagnostic data. The first transmitter 34 can receive a request instruction from the personal computer 2. Here, the request instruction is a signal that requests the vehicle information management system 3 to transmit diagnostic data. The warning lamp 4 turns on when the abnormality specifying unit 322 specifies an abnormality.

The personal computer 2 reads out diagnostic data from the storage 33 during repair and maintenance. The personal computer 2 is connected to the motorcycle 1 upon transmitting and receiving data. The personal computer 2 includes a second transmitter 21, a second receiver 22, and a display 23.

The second transmitter 21 transmits a request instruction to the first receiver 34 that requests diagnostic data to be transmitted. The second receiver 22 receives one or more frames of diagnostic data transmitted from the first transmitter 35. The diagnostic data received at the second receiver 22 is output at the display 23. The display 23 displays the diagnostic data received at the second receiver 22.

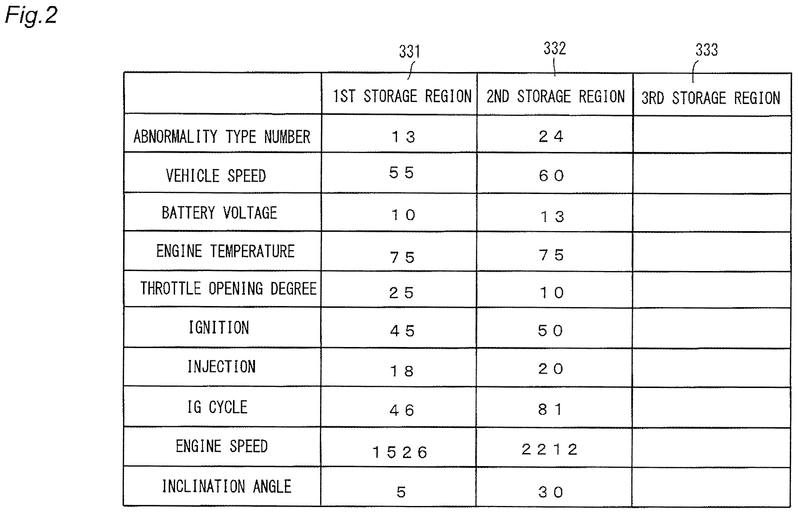

Fig. 2 shows an example of how two frames of diagnostic data are stored in the storage 33. The first and second storage regions 331 and 332 of the storage 33 each store one frame of diagnostic data. The third storage region 333 stores no diagnostic data. In the motorcycle 1, abnormality type numbers are previously set depending on types of abnormalities and each of diagnostic data pieces includes an abnormality type number. The items or numerical values for the diagnostic data shown in Fig. 2 are simply examples and they are not limited to the examples. For example, the number of items in one frame of diagnostic data may be different from the example shown in Fig. 2. The number of items or contents included in diagnostic data are sometimes different among different kinds of vehicles. Therefore, diagnostic data for the motorcycle 1 may be different from diagnostic data for any of other vehicles as to the number of items or contents included in one frame of diagnostic data. Items used by a worker during repair may be common items rather than different items among the vehicles and common items rather than different items may be used for each diagnostic data piece.

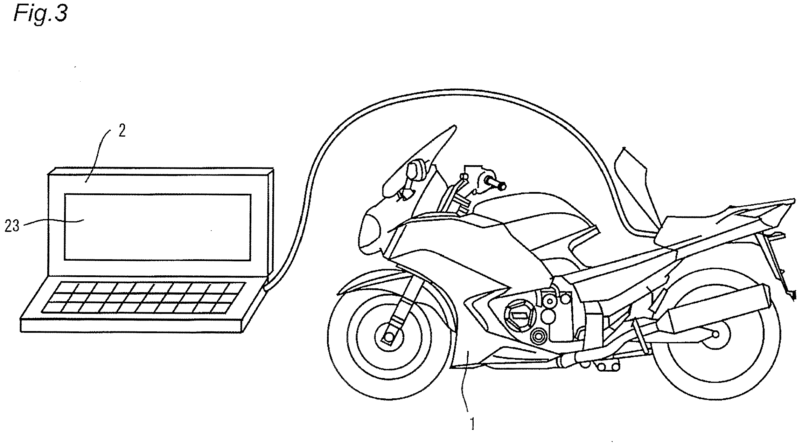

Fig. 3 shows how the motorcycle 1 is connected to the personal computer 2. When a malfunction or an abnormality is specified and repair is carried out, a repair worker connects the motorcycle 1 and the personal computer 2. The personal computer 2 reads out diagnostic data stored in the storage 33 from the motorcycle 1. The personal computer 2 displays the diagnostic data read out from the motorcycle 1 at the display 23. A repair worker checks the abnormality or the content of the malfunction based on the diagnostic data displayed at the display 23 and carries out repair.

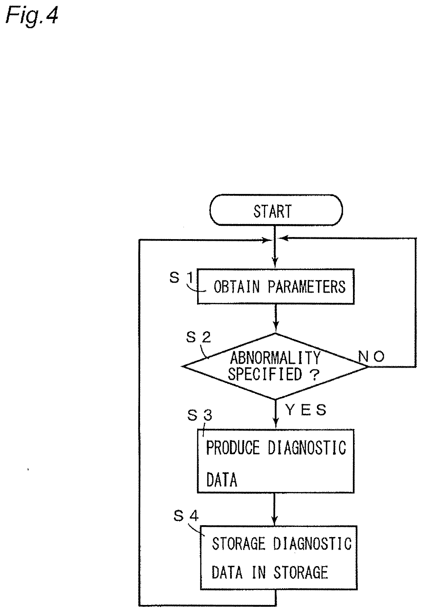

Fig. 4 is a flowchart for illustrating an operation carried out when diagnostic data is stored in the storage 33. The plurality of detection sensors 31 obtain parameters related to a state of the vehicle (step S1). When the parameters are obtained, an abnormality about the vehicle is specified based on the parameters obtained by the detection sensors 31 (step S2). When the vehicle has no abnormality (NO in step S2), the program returns to step S1. On the other hand, if an abnormality about the vehicle is specified (YES in S2), the diagnostic data producing unit 323 produces one frame of diagnostic data based on the parameters detected by the detection sensors 31 (step S3). When one frame of diagnostic data is produced, the diagnostic data is stored in the storage 33 (step S4).

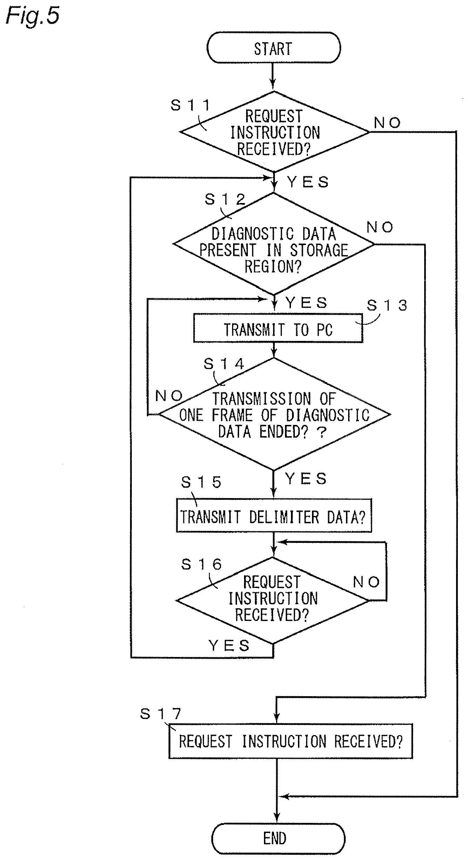

Fig. 5 is a flowchart for illustrating an operation carried out when diagnostic data is transmitted to the personal computer 2 from the motorcycle 1. It is determined whether the first receiver 34 has received a request instruction from the personal computer 2 (step S11). If the first receiver 34 has not received a request instruction (NO in step S11), the program ends. Alternatively, the program may return to step S11 to be in a stand-by state for reception of a request instruction. On the other hand, if the first receiver 34 has received a request instruction (YES in step S11), it is then determined whether diagnostic data is stored in a storage region (step S12). If the diagnostic data is not stored in the storage region (NO in step S12), the first transmitter 35 transmits terminal data that indicates that no diagnostic data is stored (step S17). On the other hand, if diagnostic data is stored in a storage region (YES in step S12), a first frame of diagnostic data is transmitted to the personal computer 2 (step S13). It is then determined whether transmission of one frame of diagnostic data has been finished (step S14). If transmission of one frame of diagnostic data has not been finished (NO in step S14), the first transmitter 35 continues to transmit the diagnostic data to the personal computer 2. On the other hand, if the transmission of one frame of diagnostic data has been finished (YES in step S14), the first transmitter 35 transmits delimiter data to the personal computer 2 (step S15).

After transmitting the delimiter data to the personal computer 2 (step S15), it is determined whether a request instruction has been received (step S16). If no request instruction has been received (NO in step S16), step S16 is repeated. If a request instruction has been received (YES in step S16), it is determined whether diagnostic data is stored in the next storage region (step S12). If diagnostic data is stored in the next storage region (YES in step S12), the operation from steps S13 to S16 is repeated. On the other hand, if no diagnostic data is stored in the next storage region (NO in step S12), the first transmitter 35 transmits terminal data that indicates the end of transmission of all the frames of diagnostic data to the personal computer 2 (step S17). Upon receiving the terminal data, the personal computer 2 determines that all the frames of diagnostic data have been received.

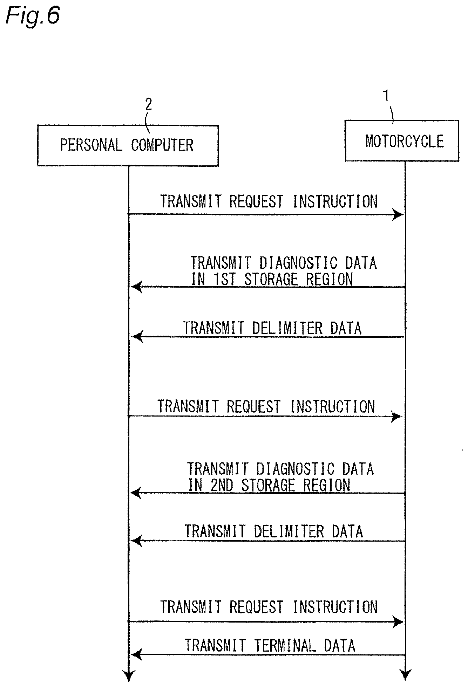

Fig. 6 shows an operation carried out when diagnostic data stored in the storage 33 is transmitted to the personal computer 2. Fig. 6 shows, from the top to the bottom, instruction and data exchange operation when the following kinds of operation are carried out: the operation of transmitting diagnostic data stored in the first storage region 331 to the personal computer 2, the operation of transmitting diagnostic data stored in the second storage region 332 to the personal computer 2, and the operation of transmitting terminal data to the personal computer 2.

When the first receiver 34 receives a request instruction from the personal computer 2 that requests the diagnostic data stored in the first storage region 331, the second storage region 332, and the third storage region 333 to be transmitted, the first transmitter 35 transmits the diagnostic data stored in the first storage region 331 to the personal computer 2. When transmission of one frame of the diagnostic data stored in the first storage region 331 ends, the first transmitter 35 transmits delimiter data to the personal computer 2. In this way, the diagnostic data stored in the first storage region 331 is transmitted to the personal computer 2.

When the first receiver 34 receives a request instruction from the personal computer 2 after the diagnostic data stored in the first storage region 331 is transmitted to the personal computer 2, the first transmitter 35 transmits one frame of the diagnostic data stored in the second storage region 332 to the personal computer 2. After the end of transmission of the diagnostic data stored in the second storage region 332, the first transmitter 35 transmits delimiter data to the personal computer 2. In this way, the diagnostic data stored in the second storage region 332 is transmitted to the personal computer 2.

After the diagnostic data stored in the second storage region 332 is transmitted to the personal computer 2, the first receiver 34 receives a request instruction from the personal computer 2. Since no diagnostic data is stored in the third storage region 333, diagnostic data cannot be transmitted to the personal computer 2. Therefore, the first transmitter 35 transmits terminal data that indicates the end of transmission of all the frames of the diagnostic data to the personal computer 2.

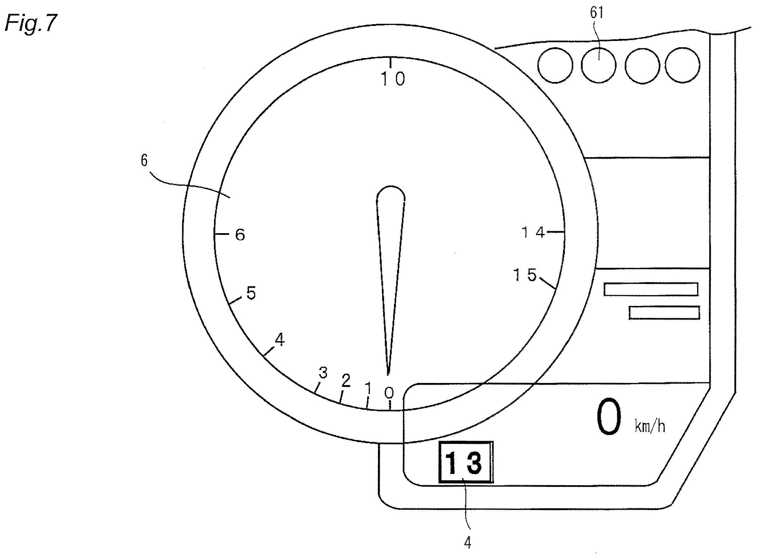

Fig. 7 is a partly enlarged front view of a meter 6 provided at the motorcycle 1. The meter 6 indicates parameters such as a vehicle speed that indicate a state of the motorcycle 1. The meter 6 is provided with the warning lamp 4 and an indicator 61. The warning lamp 4 indicates the type of an abnormality specified by the abnormality specifying unit 232. The warning lamp 4 turns on when the abnormality specifying portion 232 specifies an abnormality. A rider can recognize the occurrence of an abnormality by warning from the warning lamp 4. The indicator 61 notifies a rider for example of a reduction in fuel.

### Features of the Embodiment

In the above-described motorcycle 1, after one or more frames of diagnostic data are transmitted, terminal data is transmitted to the personal computer 2. Upon receiving the terminal data, the personal computer 2 can determine the end of transmission of the diagnostic data. Therefore, in the motorcycle 1, if the number of items included in diagnostic data is unknown or the number of pieces of diagnostic data to be transmitted is unknown for each vehicle, it can be determined whether all the diagnostic data pieces for transmission have been received. Therefore, all the diagnostic data pieces to be transmitted can be received for vehicles with different numbers of items included in diagnostic data and different numbers of diagnostic data pieces stored in the storages. The motorcycle 1 can determine the end of data reception, and therefore data can be transmitted/received regardless of kinds of vehicles. The motorcycle 1 can cope with cases where the specification of diagnostic data such as the number of items included in the diagnostic data is changed.

The personal computer 2 can determine the end of transmission of one or more frames of diagnostic data, and therefore the received diagnostic data can be processed quickly. Therefore, the personal computer 2 can display diagnostic data at the display 23 immediately after receiving all the frames of diagnostic data. In this way, a repair worker can quickly start repair operation.

In an arrangement that requires exchange of cartridges so that diagnostic data with a different item number or a different content can be read, an external device must read out a control program every time cartridges are exchanged. Therefore, in the arrangement that requires cartridge exchange, much time is necessary to read diagnostic data for a plurality of different kinds of vehicles. In the above-described embodiment, the personal computer 2 does not have to read a plurality of control programs when a plurality of frames of diagnostic data with different numbers of items or different contents are received. Therefore, in the arrangement according to the above-described embodiment, time required for accessing a plurality of frames of diagnostic data with different numbers of items or different contents can be shorter than that necessary in the arrangement that requires cartridge exchange.

The motorcycle 1 eliminates the necessity of cumbersome operation such as cartridge exchanging operation. Therefore, the motorcycle offers more convenience to a repair worker than the arrangement that requires cartridge exchange.

In the above-described motorcycle 1, delimiter data is transmitted to the personal computer 2 every time transmission of one frame of diagnostic data ends. Therefore, the personal computer 2 can determine the end of transmission of one frame of diagnostic data. Therefore, if the number of items included in diagnostic data is unknown, the end of reception of one frame of diagnostic data can be determined.

### Other Embodiments

(1) The above-described embodiment relates to the motorcycle 1 but the present teaching is not limited to this and is also applicable to a three- or four- wheeled saddle riding type vehicle.
(2) In the above-described embodiment, the motorcycle 1 includes the storage 33 having the three storage regions but the present teaching is not limited to the arrangement. The number of storage regions is not limited, and a vehicle may include one or two storage regions or four or five storage regions.
(3) According to the above-described embodiment, one frame of diagnostic data on a batch is transmitted to the personal computer 2 when the diagnostic data is transmitted to the personal computer 2 but the present teaching is not limited to the example. According to the present teaching, diagnostic data may be transmitted to the personal computer 2 on an item-basis in diagnostic data.
(4) According to the embodiment, a rider is warned about the occurrence of an abnormality by the warning lamp 4, but the present teaching is not limited to this arrangement. For example, the indicator 61 may light up to carry out such warning.

The embodiment discloses a vehicle information management system that manages diagnostic data indicating a vehicle state, comprising: a plurality of parameter detectors 31 each detecting a parameter related to the vehicle state; a diagnostic data producing unit 323 that produces the diagnostic data based on a parameter detected by each of the parameter detectors 31; a storage 33 capable of storing one or more diagnostic data pieces; and a transmitter 35 that transmits the one or more diagnostic data pieces stored in the storage 33 to an external device connected to the vehicle, the transmitter 35 transmitting terminal data after transmitting all of the one or more diagnostic data pieces. The transmitter 35 transmits delimiter data to the external device every time transmission of one piece of diagnostic data ends when the one or more diagnostic data pieces are sequentially transmitted to the external device.

The embodiment further comprises a receiver that receives a request instruction that requests the diagnostic data to be transmitted from the external device, and the transmitter 35 transmits the one or more diagnostic data pieces to the external device upon receiving the request instruction at the receiver.

The embodiment further comprises an abnormality specifying unit 322 that specifies a type of an abnormality generated at the vehicle, the storage 33 storing the diagnostic data when an abnormality is specified by the abnormality specifying unit.

The embodiment also discloses a malfunction diagnostic system, comprising such vehicle information management system and an external device connectable to the vehicle and capable of receiving the one or more diagnostic data pieces from the vehicle information management system. The embodiment also discloses a saddle riding type vehicle comprising such a vehicle information management system.

The embodiment also discloses such saddle riding type vehicle further comprising: an abnormality specifying unit that specifies a type of an abnormality generated at the vehicle; and a warning lamp that warns a rider about the abnormality specified by the abnormality specifying unit.

The embodiment also discloses a vehicle information managing method for managing diagnostic data that indicates a vehicle state, comprising:
a first step of detecting a parameter related to the vehicle state;
a second step of producing the diagnostic data based on the parameter; and
a third step of transmitting one or more diagnostic data pieces stored in a storage 33 in the vehicle to an external device connected to the vehicle,
in the third step, terminal data being transmitted to the external device after the one or more diagnostic data pieces are all transmitted.

The embodiment discloses a vehicle information management system adapted for managing diagnostic data indicating a vehicle state, comprising:
a plurality of parameter detectors 31 each adapted for detecting a parameter related to the vehicle state;
a diagnostic data producing unit 323 adapted for producing the diagnostic data based on a parameter detected by each of the parameter detectors 31;
a storage 33 adapted for storing one or more diagnostic data pieces; and
a transmitter 35 adapted for transmitting the one or more diagnostic data pieces stored in the storage 33 to an external device connected to the vehicle,
the transmitter 35 is adapted for transmitting terminal data after transmitting all of the one or more diagnostic data pieces.

The transmitter 35 is adapted for transmitting delimiter data to the external device every time transmission of one piece of diagnostic data ends when the one or more diagnostic data pieces are sequentially transmitted to the external device.

The embodiment further comprises a receiver adapted for receiving a request instruction that requests the diagnostic data to be transmitted from the external device, and the transmitter 35 is adapted for transmitting the one or more diagnostic data pieces to the external device upon receiving the request instruction at the receiver.

The embodiment further comprises an abnormality specifying unit 322 adapted for specifying a type of an abnormality generated at the vehicle.

The storage 33 is adapted for storing the diagnostic data when an abnormality is specified by the abnormality specifying unit.

The embodiment also discloses a malfunction diagnostic system, comprising: a vehicle information management system and the external device connectable to the vehicle and adapted for receiving the one or more diagnostic data pieces from the vehicle information management system.

The embodiment also discloses a saddle riding type vehicle, comprising such vehicle information management system.

The embodiment also discloses a saddle riding type vehicle further comprising a warning lamp provided for warning a rider about the abnormality specified by the abnormality specifying unit.

The embodiment also discloses a vehicle information managing method for managing diagnostic data that indicates a vehicle state, comprising the steps of:
detecting at least one parameter related to the vehicle state;
producing the diagnostic data based on said detected parameter;
storing one or more diagnostic data pieces; and
transmitting the one or more stored diagnostic data pieces to an external device connected to the vehicle,
transmitting terminal data after transmitting all of the one or more diagnostic data pieces.

The embodiment further teaches transmitting delimiter data to the external device every time transmission of one piece of diagnostic data ends when the one or more diagnostic data pieces are sequentially transmitted to the external device.

The embodiment further teaches receiving a request instruction that requests the diagnostic data to be transmitted from the external device, and transmitting the one or more diagnostic data pieces to the external device upon receiving the request instruction at the receiver.

The embodiment further teaches specifying a type of an abnormality generated at the vehicle.

The embodiment further teaches storing the diagnostic data when an abnormality is specified.

The embodiment further teaches warning a rider about the abnormality specified by the abnormality specifying unit.

## Claims

1. A vehicle information management system adapted for managing diagnostic data indicating a vehicle state, comprising:
a plurality of parameter detectors (31) each adapted for detecting a parameter related to the vehicle state;
a diagnostic data producing unit (323) adapted for producing the diagnostic data based on a parameter detected by each of the parameter detectors (31);
a storage (33) adapted for storing one or more diagnostic data pieces; and
a transmitter (35) adapted for transmitting the one or more diagnostic data pieces stored in the storage (33) to an external device connected to the vehicle,
**characterized in that**
the transmitter (35) is adapted for transmitting terminal data being data that notifies the end of transmission of all the diagnostic data pieces or that diagnostic data piece is not stored in the storage region after transmitting all of the one or more diagnostic data pieces that is stored in a storage region of the storage (33) included in the vehicle.

2. A vehicle information management system according to claim 1, **characterized in that** the transmitter (35) is adapted for transmitting delimiter data to the external device every time transmission of one piece of diagnostic data ends when the one or more diagnostic data pieces are sequentially transmitted to the external device.

3. A vehicle information management system according to claim 1 or 2, **characterized by** a receiver adapted for receiving a request instruction that requests the diagnostic data to be transmitted from the external device, and
the transmitter (35) is adapted for transmitting the one or more diagnostic data pieces to the external device upon receiving the request instruction at the receiver.

4. A vehicle information management system according to any one of claims 1 to 3, **characterized by** an abnormality specifying unit (322) adapted for specifying a type of an abnormality generated at the vehicle.

5. A vehicle information management system according to claim 4, **characterized in that** the storage (33) is adapted for storing the diagnostic data when an abnormality is specified by the abnormality specifying unit.

6. A malfunction diagnostic system, comprising:
a vehicle information management system according to any one of claims 1 to 5, and the external device connectable to the vehicle and adapted for receiving the one or more diagnostic data pieces from the vehicle information management system.

7. A saddle riding type vehicle, comprising a vehicle information management system according to any one of claims 1 to 3.

8. A saddle riding type vehicle according to claim 7, further comprising an abnormality specifying unit that specifies a type of an abnormality generated at the vehicle; and a warning lamp provided for warning a rider about the abnormality specified by the abnormality specifying unit.

9. A vehicle information managing method for managing diagnostic data that indicates a vehicle state, comprising the steps of:
detecting at least one parameter related to the vehicle state;
producing the diagnostic data based on said detected parameter;
storing one or more diagnostic data pieces; and
transmitting the one or more stored diagnostic data pieces to an external device connected to the vehicle,
**characterized by**
transmitting terminal data being data that notifies the end of transmission of all the diagnostic data pieces or that diagnostic data piece is not stored in the storage region after transmitting all of the one or more diagnostic data pieces that is stored.

10. A vehicle information managing method according to claim 9, **characterized by** transmitting delimiter data to the external device every time transmission of one piece of diagnostic data ends when the one or more diagnostic data pieces are sequentially transmitted to the external device.

11. A vehicle information managing method according to claim 9 or 10, **characterized by** receiving a request instruction that requests the diagnostic data to be transmitted from the external device, and
transmitting the one or more diagnostic data pieces to the external device upon receiving the request instruction at the receiver.

12. A vehicle information managing method according to any one of claims 9 to 11, **characterized by** specifying a type of an abnormality generated at the vehicle.

13. A vehicle information managing method according to claim 12, **characterized by** storing the diagnostic data when an abnormality is specified.

14. A vehicle information managing method according to claim 12 or 13, **characterized by** warning a rider about the abnormality specified by the abnormality specifying unit.

## Patentansprüche

1. Ein Fahrzeug-Informations-Management-System, angepasst zum Managen von Diagnose-Daten, die einen Fahrzeug-Zustand anzeigen, das umfasst:
eine Mehrzahl von Parameter-Detektoren (31), jeder angepasst zum Erfassen eines Parameters bezüglich dem Fahrzeug-Zustand;
eine Diagnose-Daten-Erzeugungs-Einheit (323), angepasst zum Erzeugen der Diagnose-Daten aufgrund eines Parameters, der durch jeden von den Parameter-Detektoren (31) erfasst ist;
einen Speicher (33), angepasst zum Speichern von einem oder mehreren Diagnose-Daten-Stücken; und
einen Übertrager (35), angepasst zum Übertragen des einen oder mehreren Diagnose-Daten-Stücken, die in dem Speicher (33) gespeichert sind, zu einer externen Vorrichtung, die mit dem Fahrzeug verbunden ist;
**dadurch gekennzeichnet, dass**
der Übertrager (35) angepasst ist zum Übertragen von Anschluss-Daten, die Daten sind, welche das Ende einer Übertragung von allen von den Diagnose-Daten-Stücken anzeigt, oder dass ein Diagnose-Daten-Stück in dem Speicher-Bereich nicht gespeichert ist, nach Übertragung aller von dem einen oder mehreren Diagnose-Daten-Stücken, die in einem Speicher-Bereich des Speichers (33), der in dem Fahrzeug beinhaltet ist, gespeichert sind.

2. Ein Fahrzeug-Informations-Management-System gemäß Anspruch 1, **dadurch gekennzeichnet, dass** der Übertrager (35) angepasst ist, um Abgrenzungs-Daten zu der externen Vorrichtung zu übertragen, jedes Mal wenn Übertragung von einem Stück von Diagnose-Daten endet, wenn das eine oder mehr Diagnose-Daten-Stücke sequenziell zu der externen Vorrichtung übertragen sind.

3. Ein Fahrzeug-Informations-Management-System gemäß Anspruch 1 oder 2, **gekennzeichnet durch** einen Empfänger, der angepasst ist, um eine Anforderungs-Instruktion zu empfangen, welche die Diagnose-Daten, die zu übertragen sind, von der externen Vorrichtung anfordert, und
der Übertrager (35) ist angepasst, um das eine oder mehrere Diagnose-Daten-Stücke zu der externen Vorrichtung zu übertragen, bei Empfangen der Anforderungs-Instruktion an den Empfänger.

4. Ein Fahrzeug-Informations-Management-System gemäß zu irgendeinem der Ansprüche 1 bis 3, **gekennzeichnet durch** eine Abnormalitäts-Spezifizierungs-Einheit (322), die angepasst ist, um einen Typ einer Abnormalität, die in dem Fahrzeug erzeugt ist, zu spezifizieren.

5. Ein Fahrzeug-Informations-Management-System gemäß Anspruch 4, **dadurch gekennzeichnet, dass** der Speicher (33) angepasst ist, um die Diagnose-Daten zu speichern, wenn eine Abnormalität durch die Abnormalitäts-Spezifizierungs-Einheit spezifiziert ist.

6. Ein Fehlfunktions-Diagnose-System, das umfasst:
ein Fahrzeug-Informations-Management-System gemäß zu irgendeinem der Ansprüche 1 bis 5, und eine externe Vorrichtung, die mit dem Fahrzeug verbindbar ist, und angepasst ist, um das eine oder mehrere Diagnose-Daten-Stücke von dem Fahrzeug-Informations-Management-System zu empfangen.

7. Ein Sattel-Reit-Typ-Fahrzeug, das ein Fahrzeug-Informations-Management-System gemäß zu irgendeinem der Ansprüche 1 bis 3 umfasst.

8. Ein Sattel-Reit-Typ-Fahrzeug gemäß Anspruch 7, das weiter eine Abnormalitäts-Spezifizierungs-Einheit umfasst, die einen Typ einer Abnormalität, die in dem Fahrzeug erzeugt ist, spezifiziert; und
eine Warnlampe ist vorgesehen, zum Warnen eines Fahrers über die Abnormalität, die durch die Abnormalitäts-Spezifizierungs-Einheit spezifiziert.

9. Ein Fahrzeug-Informations-Management-Verfahren, zum Managen von Diagnose-Daten, die einen Fahrzeug-Zustand anzeigen, umfasst die Schritte:
Erfassen von zumindest einem Parameter bezüglich dem Fahrzeug-Zustand;
Erzeugen der Diagnose-Daten aufgrund dieses erfassten Parameters, Speichern von einem oder mehreren Diagnose-Daten-Stücken; und
Übertragen des einen oder mehreren gespeicherten Diagnose-Daten-Stücken zu einer externen Vorrichtung, die mit dem Fahrzeug verbunden ist;
**dadurch gekennzeichnet, dass**
Übertragen von Anschluss-Daten, die Daten sind, welche das Ende einer Übertragung von allen von den Diagnose-Daten-Stücken anzeigt, oder dass ein Diagnose-Daten-Stück in dem Speicher-Bereich nicht gespeichert ist, nach Übertragung aller von dem einen oder mehreren gespeicherten Diagnose-Daten-Stücken.

10. Ein Fahrzeug-Informations-Management-Verfahren gemäß Anspruch 9, **gekennzeichnet durch** Übertragen von Abgrenzungs-Daten zu der externen Vorrichtung, jedes Mal wenn Übertragung von einem Stück von Diagnose-Daten endet, wenn das eine oder mehr Diagnose-Daten-Stücke sequenziell zu der externen Vorrichtung übertragen sind.

11. Ein Fahrzeug-Informations-Management-Verfahren gemäß Anspruch 9 oder 10, **gekennzeichnet durch** Empfangen einer Anforderungs-Instruktion, welche die Diagnose-Daten, die zu übertragen sind, von der externen Vorrichtung anfordert, und Übertragen das eine oder mehrere Diagnose-Daten-Stücke zu der externen Vorrichtung, bei Empfangen der Anforderungs-Instruktion an den Empfänger.

12. Ein Fahrzeug-Informations-Management-Verfahren gemäß zu irgendeinem der Ansprüche 9 bis 11, **gekennzeichnet durch** Spezifizieren eines Typs einer Abnormalität, die in dem Fahrzeug erzeugt ist.

13. Ein Fahrzeug-Informations-Management-Verfahren gemäß Anspruch 12, **gekennzeichnet durch** Speichern der Diagnose-Daten, wenn eine Abnormalität spezifiziert ist.

14. Ein Fahrzeug-Informations-Management-Verfahren gemäß Anspruch 12 oder 13, **gekennzeichnet durch** Warnen eines Fahrers über die Abnormalität, die durch die Abnormalitäts-Spezifizierungs-Einheit spezifiziert.

## Revendications

1. Système de gestion d'informations de véhicule conçu pour gérer des données de diagnostic indiquant l'état d'un véhicule, comprenant :
une pluralité de détecteurs de paramètres (31) conçus chacun pour détecter un paramètre se rapportant à l'état du véhicule,
une unité de génération de données de diagnostic (323) conçue pour générer des données de diagnostic fondées sur un paramètre détecté par chacun des détecteurs de paramètres (31),
une mémoire (33) conçue pour stocker un ou plusieurs éléments de données de diagnostic, et
un émetteur (35) conçu pour transmettre le ou les éléments de données de diagnostic stockés dans la mémoire (33) à un dispositif extérieur connecté au véhicule,
**caractérisé en ce que**
l'émetteur (35) est conçu pour transmettre des données terminales représentant des données qui avertissent de la fin de transmission de tous les éléments de données de diagnostic ou bien que cet élément de données de diagnostic n'est pas stocké dans la zone de stockage après la transmission de la totalité du ou des éléments de données de diagnostic qui sont stockés dans une zone de stockage de la mémoire (33) incluse dans le véhicule.

2. Système de gestion d'informations de véhicule selon la revendication 1, **caractérisé en ce que** l'émetteur (35) est conçu pour transmettre des données de délimitation au dispositif extérieur chaque fois que la transmission d'un élément de données de diagnostic se termine lorsque le ou les éléments de données de diagnostic sont transmis séquentiellement au dispositif extérieur.

3. Système de gestion d'informations de véhicule selon la revendication 1 ou la revendication 2, **caractérisé par** un récepteur conçu pour recevoir une instruction de requête qui demande la transmission des données de diagnostic depuis le dispositif extérieur, et
l'émetteur (35) est conçu pour transmettre le ou les éléments de données de diagnostic au dispositif extérieur à la réception de l'instruction de requête au niveau du récepteur.

4. Système de gestion d'informations de véhicule selon l'une quelconque des revendications 1 à 3, **caractérisé par** une unité de spécification d'anomalie (322) conçue pour spécifier le type d'anomalie généré du véhicule.

5. Système de gestion d'informations de véhicule selon la revendication 4, **caractérisé en ce que** la mémoire (33) est conçue pour stocker les données de diagnostic lorsqu'une anomalie est spécifiée par l'unité de spécification d'anomalie.

6. Système de diagnostic de défaut de fonctionnement comprenant :
un système de gestion d'informations de véhicule conforme à l'une quelconque des revendications 1 à 5, ainsi que le dispositif extérieur pouvant être connecté au véhicule et conçu pour recevoir le ou les éléments de données de diagnostic provenant du système de gestion d'informations de véhicule.

7. Véhicule de type à selle comprenant un système de gestion d'informations conforme à l'une quelconque des revendications 1 à 3.

8. Véhicule de type à selle selon la revendication 7, comprenant en outre une unité de spécification d'anomalie qui spécifie le type d'anomalie généré au niveau du véhicule, et
une lampe d'avertissement prévue pour avertir un pilote de l'anomalie spécifiée par l'unité de spécification d'anomalie.

9. Procédé de gestion d'informations de véhicule permettant de gérer des données de diagnostic qui indiquent l'état d'un véhicule, comprenant les étapes suivantes :
la détection d'au moins un paramètre se rapportant à l'état du véhicule,
la génération des données de diagnostic fondées sur ledit paramètre détecté,
le stockage d'un ou plusieurs éléments de données de diagnostic, et
la transmission du ou des éléments de données de diagnostic stockés à un dispositif extérieur connecté au véhicule,
**caractérisé par**
la transmission de données terminales représentant des données qui avertissent de la fin de transmission de tous les éléments de données de diagnostic ou bien que cet élément de données de diagnostic n'est pas stocké dans la zone de stockage après la transmission de la totalité du ou des éléments de données de diagnostic qui sont stockés.

10. Procédé de gestion d'informations de véhicule selon la revendication 9, **caractérisé par** :
la transmission de données de délimitation au dispositif extérieur chaque fois que la transmission d'un élément de données de diagnostic se termine lorsque le ou les éléments de données de diagnostic sont transmis séquentiellement au dispositif extérieur.

11. Procédé de gestion d'informations de véhicule selon la revendication 9 ou la revendication 10, **caractérisé par** la réception d'une instruction de requête qui demande la transmission des données de diagnostic depuis le dispositif extérieur, et
la transmission du ou des éléments de données de diagnostic au dispositif extérieur à la réception de l'instruction de requête au niveau du récepteur.

12. Procédé de gestion d'informations de véhicule selon l'une quelconque des revendications 9 à 11, **caractérisé par** la spécification du type d'anomalie généré au niveau du véhicule.

13. Procédé de gestion d'informations de véhicule selon la revendication 12, **caractérisé par** le stockage des données de diagnostic lorsqu'une anomalie est spécifiée.

14. Procédé de gestion d'informations de véhicule selon la revendication 12 ou la revendication 13, **caractérisé par** l'avertissement fait auprès d'un pilote concernant l'anomalie spécifiée par l'unité de spécification d'anomalie.
